# EUROPEAN PATENT APPLICATION

(11) **EP 4 550 372 A2**
(43) Date of publication of application: **07.05.2025**
(21) Application number: 24196150.7
(22) Date of filing: 23.08.2024
(51) Int. Cl.: H01G 4/008, H01G 4/12, H01G 4/012, H01G 4/224, H01G 4/30

(54) **METHOD OF MANUFACTURING MULTILAYER ELECTRONIC COMPONENT HAVING THICKER PARTS IN THE INTERFACE ZONE INTERNAL ELECTRODES EXTERNAL ELECTRODES**

(30) Priority: 01.11.2023 KR 20230149359
(71) Applicant: Samsung Electro-Mechanics Co., Ltd., Gyeonggi-do (KR)
(72) Inventor: Hwang, Sun Ju, Suwon-si, Gyeonggi-do (KR); Lee, Dae Hee, Suwon-si, Gyeonggi-do (KR)
(74) Representative: Grünecker Patent- und Rechtsanwälte PartG mbB

(57) **Abstract**

A method of manufacturing a multilayer electronic component (100), comprising the steps of:

(step1) - disposing first internal electrode patterns (221) on a first dielectric green sheet (211), including a first main portion (211a) and a first convex portion (221b) having a thickness thicker than a thickness of the first main portion (221a), wherein a first gap (g1) is created on the first dielectric green sheet (211) on which the first internal electrode patterns (221) are not disposed,

(step 2) - applying a first dielectric paste (211') to the first gap (g1) and the first internal electrode patterns (221) (to form a first sheet (S1)?),

(step 3) - disposing second internal electrode patterns (222) on a second dielectric green sheet (212), including a second main portion (222a) and a second convex portion (222b) having a thickness thicker than a thickness of the second main portion (222a), wherein a second gap (g2) is created on the second dielectric green sheet (212) on which the second internal electrode patterns (222) are not disposed,

(step 4) - forming a second sheet (S2) by applying a second dielectric paste (212') to the second gap (g2) and the second internal electrode patterns (222);

(step 5) - forming a laminated bar (10) by alternately disposing the first sheet (S1) and the second sheet (S2);

(step 6) - forming a laminate by cutting the laminated bar (10), and

(step 7) - forming the external electrodes (130, 140) on the laminate,

Wherein:

(step 8) - the forming the laminated bar (10) is performed by disposing the first sheet (S1) so that the first dielectric paste (211') faces downward in a stacking direction (T) and disposing the second sheet (S2) so that the second dielectric paste (212') faces upward in the stacking direction (T).

And a step of forming a laminate (11) by cutting the laminated bar (10) after firing, and forming external electrodes (130, 140) on the laminate.

## Description

### CROSS-REFERENCE TO RELATED APPLICATION(S)

This application claims benefit of priority to Korean Patent Application No. 10-2023-0149359 filed on November 1, 2023 in the Korean Intellectual Property Office, the disclosure of which is incorporated herein by reference in its entirety.

### TECHNICAL FIELD

The present disclosure relates to a method of manufacturing a multilayer electronic component.

Multilayer Ceramic Capacitors (MLCCs), as multilayer electronic components, are chip-type capacitors mounted on the printed circuit boards of various types of electronic products, such as circuits such as imaging devices, for example, liquid crystal displays (LCDs) and plasma display panels (PDPs), computers, smartphones, mobile phones, on-board charger (OBC) DC-DC converters of electric vehicles, and the like, to charge or discharge electricity.

As multilayer electronic components are ever more miniaturized and have higher capacitance, the thickness of dielectric layers and internal electrodes is being reduced and the number of stacks is increasing. As the number of stacks of dielectric layers and internal electrodes increases, unlike the capacitance forming portion including all portions of the internal electrodes connected to external electrodes of different polarities, the area extending from the capacitance forming portion to the external electrode for connection to the external electrode includes only internal electrodes that are connected to external electrodes of the same polarity. Thus, step portions may be formed during the lamination process, and such step portions may cause deformation of the internal electrodes and dielectric layers during a pressing process.

In the related art, to reduce the level difference between internal electrodes, in an internal electrode printing process, an internal electrode pattern connected to an external electrode is formed as a thick portion, and the end of the internal electrode pattern forming a margin portion is formed as a thin portion, to then be disposed on a ceramic green sheet, to form a material sheet. Ceramic green sheets are sandwiched between the material sheets and laminated. An attempt was made to eliminate a step portion by stacking the thick portion of the included internal electrode and a concave portion of the thin portion of the adjacent internal electrode to overlap in the stacking direction and by applying equal pressure in the stacking direction. However, in this case, there is a risk of a short circuit occurring between the internal electrodes, and since an additional process of disposing a separate ceramic sheet is performed, problems may occur in which the working conditions for sheet peeling and lamination are different, process operations become complicated and costs increase.

### SUMMARY

An aspect of the present disclosure is to suppress the occurrence of short circuits between internal electrodes when a first internal electrode pattern is disposed to face downwards in a stacking direction and a second internal electrode pattern is disposed to face upwards in the stacking direction to eliminate a level difference between the internal electrodes.

An aspect of the present disclosure is to dispose a first internal electrode pattern to face downwards in a stacking direction and a second internal electrode pattern to face upwards in the stacking direction to eliminate a level difference between internal electrodes, and to suppress a phenomenon causing deformation of the existing dielectric green sheet when additionally disposing a separate dielectric green sheet on the first internal electrode pattern and the second internal electrode pattern.

According to an aspect of the present disclosure, a method of manufacturing a multilayer electronic component includes disposing first internal electrode patterns including a first main portion and a first convex portion, thicker than the first main portion, at a first gap, on a first dielectric green sheet, and forming a first sheet by applying a first dielectric paste to the first gap and the first internal electrode patterns; disposing second internal electrode patterns including a second main portion and a second convex portion, thicker than the second main portion, at a second gap, on a second dielectric green sheet, and forming a second sheet by applying a second dielectric paste to the second gap and the second internal electrode patterns; forming a laminated bar by alternately disposing the first sheet and the second sheet; forming a laminate by cutting the laminated bar; and forming an external electrode on the laminate. The forming the laminated bar is performed by disposing the first sheet so that the first dielectric paste faces downwardly in a stacking direction, and disposing the second sheet so that the second dielectric paste faces upwardly in the stacking direction.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view illustrating a multilayer electronic component according to an embodiment;
FIG. 2 is a cross-sectional view taken along line I-I' of FIG. 1;
FIG. 3 is a cross-sectional view taken along line II-II' of FIG. 1;
FIG. 4 is a diagram schematically illustrating operations of forming a laminated bar according to an embodiment;
FIG. 5 is a diagram schematically illustrating operations of forming a laminate according to an embodiment;
FIG. 6 is a diagram schematically illustrating operations of forming a laminated bar according to an embodiment; and
FIG. 7 is a diagram schematically illustrating operations of forming a laminated bar according to an embodiment.

### DETAILED DESCRIPTION

Hereinafter, some embodiments will be described with reference to detailed embodiments and attached drawings. However, the embodiments may be modified to have various other forms, and the scope of the present disclosure is not limited to the embodiments described below. Additionally, embodiments are provided to more completely explain the present disclosure to those skilled in the art. Therefore, the shapes and sizes of elements in the drawings may be exaggerated for clearer explanation, and elements indicated by the same symbol in the drawings are the same element.

To clearly explain the present disclosure in the drawings, parts unrelated to the description are omitted, and the size and thickness of each component illustrated in the drawings are arbitrarily illustrated for convenience of explanation, so the present disclosure is not necessarily limited to what is illustrated. Additionally, components with the same function within the scope of the same idea are described using the same reference numeral. Furthermore, throughout the specification, when a part is said to "include" a certain element, this means that it may further include other elements, rather than excluding other elements, unless specifically stated to the contrary.

In the drawings, the first direction may be defined as the stacking direction or thickness (T) direction, the second direction may be defined as the length (L) direction, and the third direction may be defined as the width (W) direction.

### Multilayer Electronic Components

Before describing a method of manufacturing a multilayer electronic component according to an embodiment, a description of a multilayer electronic component according to an embodiment, which may be manufactured by a method of manufacturing a multilayer electronic component according to an embodiment of the present disclosure, will now be provided.

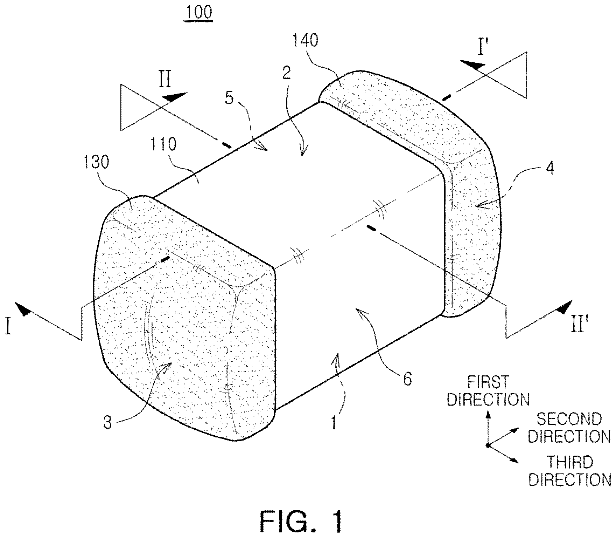

FIG. 1 is a perspective view illustrating a multilayer electronic component according to an embodiment.

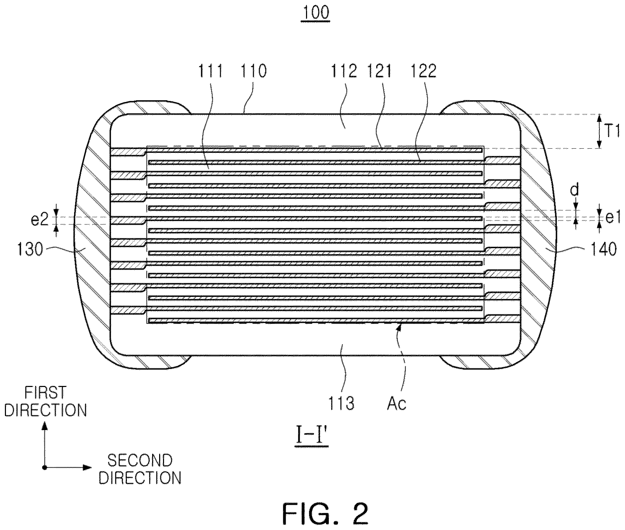

FIG. 2 is a cross-sectional view taken along line I-I' of FIG. 1.

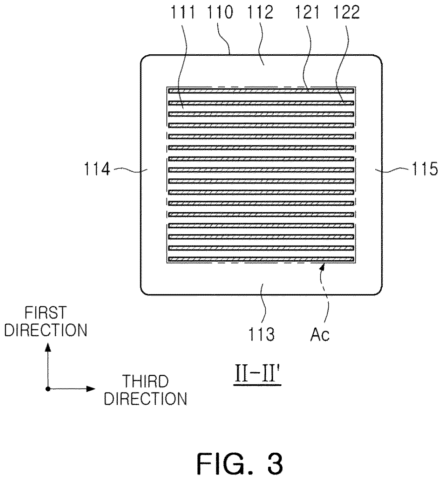

FIG. 3 is a cross-sectional view taken along line II-II' of FIG. 1.

A multilayer electronic component 100 may include a body 110 including a dielectric layer 111 and first and second internal electrodes 121 and 122 alternately disposed with the dielectric layer interposed therebetween, and external electrodes 130 and 140 disposed on the body 110.

The body 110 may have the dielectric layers 111 and the internal electrodes 121 and 122 alternately stacked.

There is no particular limitation on a detailed shape of the body 110, but as illustrated, the body 110 may have a hexahedral shape or a similar shape. Due to shrinkage of the ceramic powder contained in the body 110 during the firing process, the body 110 may not have a hexahedral shape with completely straight lines, but may have a substantially hexahedral shape.

The body 110 may have first and second surfaces 1 and 2 opposing each other in a first direction, third and fourth surfaces 3 and 4 connected to the first and second surfaces 1 and 2 and opposing each other in a second direction, and fifth and sixth surfaces 5 and 6 connected to first to fourth surfaces and opposing each other in a third direction.

The plurality of dielectric layers 111 forming the body 110 are in a fired state, and the boundaries between adjacent dielectric layers 111 may be integrated to the extent that it is difficult to determine without using a scanning electron microscope (SEM).

According to some embodiments, the raw materials forming the dielectric layer 111 are not particularly limited as long as sufficient electrostatic capacitance may be obtained, and detailed components will be described together in the process of describing dielectric green sheets 211 and 212, which will be described later.

The average thickness d of the dielectric layer 111 is not particularly limited.

To miniaturize the multilayer electronic component 100 and increase capacitance of the multilayer electronic component 100, the average thickness d of the dielectric layer 111 may be 0.35 um or less, and to improve the reliability of the multilayer electronic component 100 under high temperature and high pressure, the average thickness d of the dielectric layer 111 may be 2 µm or more.

The average thickness d of the dielectric layer 111 may refer to the average thickness d of the dielectric layer 111 disposed between the first and second internal electrodes 121 and 122.

The average thickness d of the dielectric layer 111 may be measured by scanning an image of a cross-section in the length and thickness direction (L-T) of the body 110 with a scanning electron microscope (SEM) at 10,000 magnification. In more detail, the average value may be measured by measuring the thickness of one dielectric layer in a scanned image at 30 points at equal intervals in the length direction. The 30 equally spaced points may be designated in a capacitance forming portion Ac. Additionally, by extending this average value measurement to 10 dielectric layers and measuring the average value, the average thickness of the dielectric layer may be further generalized.

The body 110 may include a capacitance forming portion Ac disposed inside the body 110 and including first internal electrodes 121 and second internal electrodes 122 alternately disposed with the dielectric layer 111 interposed therebetween, to form capacitance, and cover portions 112 and 113 formed above and below the capacitance forming portion Ac in the first direction.

In addition, the capacitance forming portion Ac is provided as a part that contributes to forming the capacitance of the capacitor, and may refer to an area in which a plurality of first and second internal electrodes 121 and 122 overlap in the first direction with the dielectric layer 111 therebetween.

The cover portions 112 and 113 may include an upper cover portion 112 disposed on one side of the capacitance forming portion Ac in the first direction and a lower cover portion 113 disposed on the other side of the capacitance forming portion Ac in the first direction.

The cover portions 112 and 113 may be formed by stacking a single dielectric layer or two or more dielectric layers on the upper and lower surfaces of the capacitance forming portion Ac respectively in the thickness direction, and may basically serve to prevent damage to the internal electrodes due to physical or chemical stress.

The cover portions 112 and 113 do not include internal electrodes and may include the same material as the dielectric layer 111.

The cover portions 112 and 113 may include a ceramic material, for example, a barium titanate (BaTiO₃)-based ceramic material.

There is no need to specifically limit the average thickness of the cover portions 112 and 113. However, to more easily obtain miniaturization and high capacitance of multilayer electronic components, the average thickness of the cover portions 112 and 113 may be 20 um or less.

Margin portions 114 and 115 may be disposed on one side and the other side of the capacitance forming portion Ac in the third direction.

As illustrated in FIG. 3, the margin portions 114 and 115 may refer to an area between both ends of the first and second internal electrodes 121 and 122 and the boundary surface of the body 110, in a cross section of the body 110 cut in the width-thickness (W-T) direction.

The margin portions 114 and 115 may basically serve to prevent damage to the internal electrodes due to physical or chemical stress.

The width of the margin portions 114 and 115 does not need to be particularly limited. However, to more easily obtain miniaturization and high capacitance of multilayer electronic components, the average thickness of the margin portions 114 and 115 may be 20 um or less.

The average width of the margin portions 114 and 115 may refer to the average size of the margin portions 114 and 115 in the third direction, and may be an average value of the third direction sizes of the margin portions 114 and 115 measured at five points at equal intervals on the side surface of the capacitance forming portion Ac.

The plurality of internal electrodes 121 and 122 may be alternately disposed with the dielectric layer 111 interposed therebetween.

The plurality of internal electrodes 121 and 122 may include first and second internal electrodes 121 and 122. The first and second internal electrodes 121 and 122 are alternately disposed to face each other with the dielectric layer 111 constituting the body 110, interposed therebetween, and may be connected to the third and fourth surfaces 3 and 4 of the body 110, respectively.

In detail, one end of the first internal electrode 121 may be connected to the third surface 3, and one end of the second internal electrode 122 may be connected to the fourth surface 4.

The first internal electrode 121 is spaced apart from the fourth surface 4 and is exposed through the third surface 3, and the second internal electrode 122 is spaced apart from the third surface 3 and may be exposed through the fourth surface 4. A first external electrode 130 is disposed on the third surface 3 of the body and connected to the first internal electrode 121, and a second external electrode 140 may be disposed on the fourth surface 4 of the body and connected to the second internal electrode 122.

For example, the first internal electrode 121 is not connected to the second external electrode 140, but is connected to the first external electrode 130, and the second internal electrode 122 is not connected to the first external electrode 130 but is connected to the second external electrode 140. Accordingly, the first internal electrode 121 may be formed at a certain distance apart from the fourth surface 4, and the second internal electrode 122 may be formed at a certain distance apart from the third surface 3.

In this case, the first and second internal electrodes 121 and 122 may be electrically separated from each other by the dielectric layer 111 disposed therebetween.

Referring to FIG. 2, it can be seen that in the internal electrodes 121 and 122, the thickness of the region extending from the capacitance forming portion Ac to the external electrode is thicker than the thickness of the region included in the capacitance forming portion Ac. Through this structure, the connectivity between the internal electrodes 121 and 122 and the external electrodes 130 and 140 may be improved.

In addition, referring to FIG. 2, the thick area of the first internal electrode 121 is disposed to face one side (downwards) in the first direction, and the thick area of the second internal electrode 122 is disposed to face the other side (upwards) in the first direction. Accordingly, step portions in the stacking and pressing process of multilayer electronic components may be prevented.

The average thickness e1 of the internal electrode area included in the capacitance forming portion Ac is not particularly limited, but for miniaturization and high capacitance of the multilayer electronic component 100, the average thickness e1 of the internal electrode area included in the capacitance forming portion Ac may be 0.35 µm or less, and to improve the reliability of the multilayer electronic component 100 under high temperature and high pressure, the average thickness e1 of the internal electrode area included in the capacitance forming portion Ac may be 2 µm or more.

For example, when the ratio of the average thickness e2 of the internal electrode in an area not included in the capacitance forming portion to the average thickness e1 of the internal electrode in an area included in the capacitance forming portion Ac, is not particularly limited, but is 1.1 or more and 2.0 or less, short circuits between the internal electrodes 121 and 122 may be prevented while improving the connectivity between the internal electrodes 121 and 122 and the external electrodes 130 and 140.

In the case of the average thickness e1 of the internal electrode in an area included in the capacitance forming portion Ac, among the internal electrodes extracted from the image of a cross-section scanned with a scanning electron microscope (SEM) in the length and thickness direction (L-T) (the first direction) cut from the center of the width direction (third direction) of the body 110, for a total of 5 layers of internal electrodes including two layers in the upper portion and two layers in the lower portion based on one layer of internal electrode at the point where the longitudinal center line of the body and the thickness direction (the first direction) center line of the body meet, 5 points including two points to the left and two points to the right of one reference point based on the point where the longitudinal (the second direction) center line and the thickness direction (the first direction) center line of the body meet are determined at equal intervals, and then, the value of the average thickness e1 of the internal electrode in the area included in the capacitance forming portion Ac may be obtained by measuring the thickness of respective points.

In the case of the average thickness e2 of the internal electrode in an area not included in the capacitance forming portion Ac, among the internal electrodes extracted from the image of a cross-section scanned with a scanning electron microscope (SEM) in the length and thickness direction (L-T) (the first direction) cut from the central portion in the width direction (third direction) of the body 110, for a total of 5 layers of internal electrodes including two upper layers and two lower layers, based on one layer of the internal electrode at the point where the longitudinal center line and the thickness direction (the first direction) center line of the longitudinal margin area of the capacitance forming portion Ac meet, five points at equal intervals, including two to the left and two to the right, centered on the point where the longitudinal center line and the thickness direction center (the first direction) line of the longitudinal margin area meet, are determined, and then, the average thickness e2 of the internal electrode in the area not included in the capacitance forming portion Ac may be obtained with the average value by measuring the thicknesses of respective points.

The external electrodes 130 and 140 may be disposed on the third surface 3 and the fourth surface 4 of the body 110, respectively, and the first external electrode 130 may be electrically connected to the first internal electrode 121, and the second external electrode 140 may be electrically connected to the second internal electrode 122.

The number or shape of the external electrodes 130 and 140 may be changed, depending on the shape of the internal electrodes 121 and 122 or other uses.

On the other hand, the external electrodes 130 and 140 may be formed using any material as long as it has electrical conductivity, such as metal, and a detailed material may be determined considering electrical characteristics, structural stability, and the like. Further, the external electrodes 130 and 140 may have a multilayer structure.

For example, the external electrodes 130 and 140 may include an electrode layer disposed on the surface of the body 110 and in direct contact with the internal electrodes 121 and 122, and a plating layer formed on the electrode layer.

For a more detailed example of the electrode layer, the electrode layer may be a fired electrode containing a conductive metal and glass, or a resin-based electrode containing a conductive metal and resin.

As the conductive metal included in the electrode layer, any material with excellent electrical conductivity may be used and is not particularly limited. For example, the conductive metal may be at least one of nickel (Ni), copper (Cu), or alloys thereof.

The plating layer plays a role in improving mounting characteristics. The type of the plating layer is not particularly limited, and may be a plating layer containing at least one of Ni, Sn, Pd, or alloys thereof, and may be formed of multiple layers.

For a more detailed example of the plating layer, the plating layer may be a Ni plating layer or a Sn plating layer, and may be in the form in which a Ni plating layer and a Sn plating layer are formed sequentially on the electrode layer, or may be in the form in which a Sn plating layer, a Ni plating layer, and a Sn plating layer are formed sequentially. Additionally, the plating layer may include a plurality of Ni plating layers and/or a plurality of Sn plating layers.

### Method of Manufacturing Multilayer Electronic Components

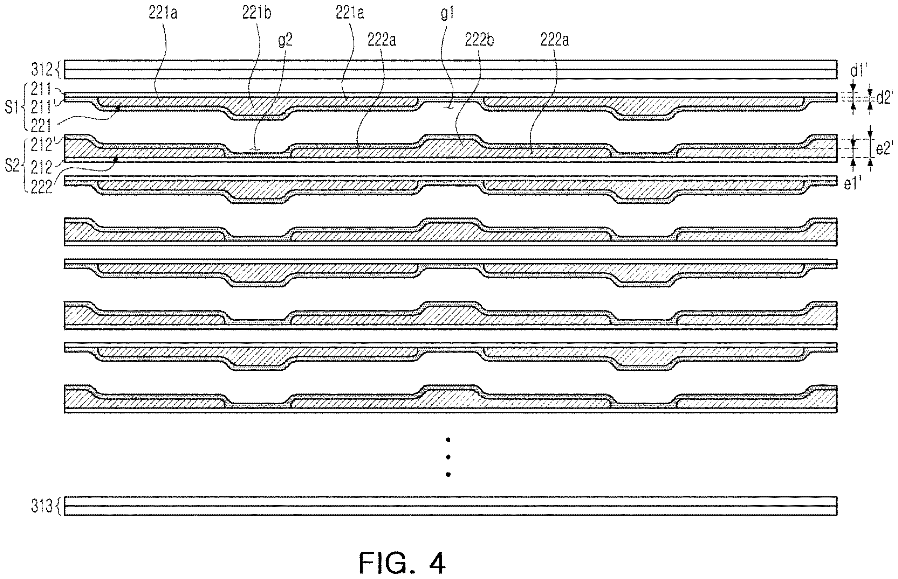

FIG. 4 is a diagram schematically illustrating operations of forming a laminated bar according to an embodiment.

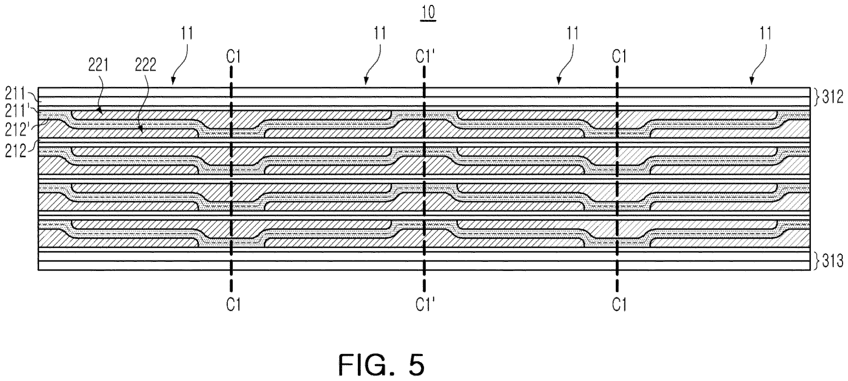

FIG. 5 is a diagram schematically illustrating operations of forming a laminate according to an embodiment.

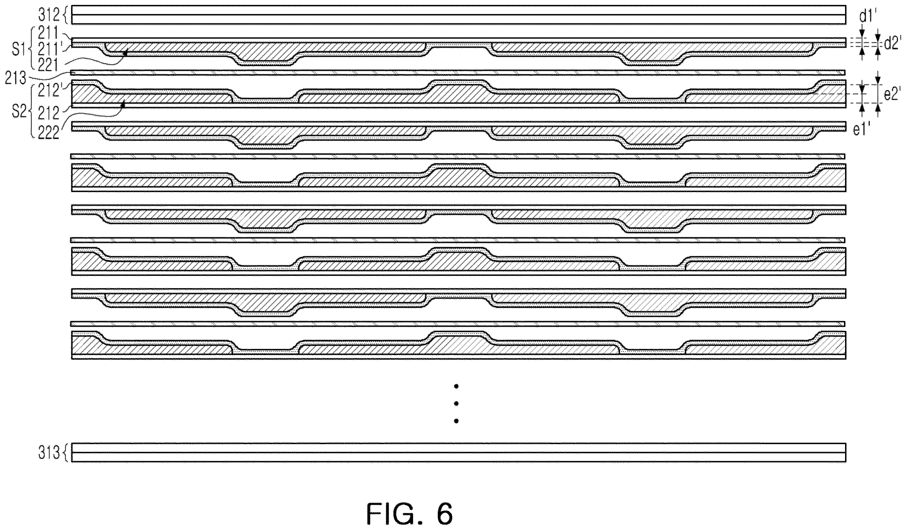

FIG. 6 is a diagram schematically illustrating operations of forming a laminated bar according to an embodiment.

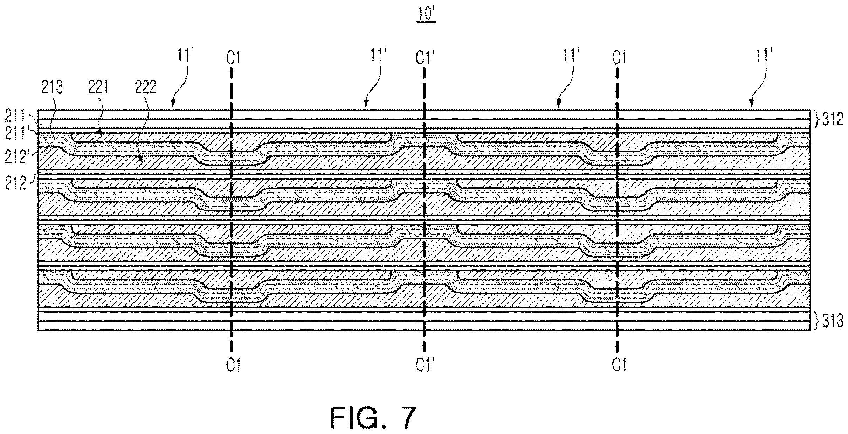

FIG. 7 is a diagram schematically illustrating operations of forming a laminated bar according to an embodiment.

Hereinafter, the manufacturing method and various embodiments of the multilayer electronic component will be described in detail with reference to FIGS. 4 to 7.

As an example of improving the capacitance per unit volume of a multilayer electronic component, a method of thinning dielectric layers and internal electrodes and increasing the number of stacks may be used. As the number of stacks increases, the difference between the number of internal electrode stacks in the capacitance forming portion and the number of stacks of internal electrodes in the longitudinal margin also increases. Thus, the formation of a step portion between the capacitance forming portion and the longitudinal margin may intensify. The step portion between the capacitance forming portion and the longitudinal margin may cause deformation of the internal electrode and dielectric layer, thereby increasing the thickness deviation of the internal electrode and the dielectric layer, and accordingly, when applying voltage to the multilayer electronic component, the electric field may be amplified in areas where the dielectric layer is relatively thin, which may increase the frequency of insulation breakdown.

In the related art, to prevent the step portion of the internal electrodes, the internal electrode pattern connected to the external electrode in the internal electrode printing process is formed as a thick portion, and the end of the internal electrode pattern forming the margin is formed as a thin portion, to then be disposed on the ceramic green sheet, thereby forming a material sheet. Also, the ceramic green sheets are sandwiched between material sheets and stacked so that the concave portions of the thick and thin portions of neighboring material sheets overlap in the stacking direction, and even pressure is applied in the stacking direction, thereby having been attempting to prevent a step portion.

However, when lamination is performed so that the thick and thin portions of the internal electrodes face each other and overlap, even if a separate ceramic sheet is sandwiched therebetween, since the gap between the thick and thin portions is relatively narrow, there is a risk of short circuits occurring between the internal electrodes. Further, since an additional process of disposing a separate ceramic sheet is performed, the working conditions for peeling and stacking the sheets may change, complicating the process steps, and increasing costs. In addition, if the organic components contained in the material sheet and the ceramic sheet sandwiched between the material sheets are the same, the organic components in the material sheets may melt and the material sheets may deform.

Accordingly, in some embodiments of the present disclosure, it is intended to prevent damage between dielectric sheets while mitigating the level difference in the stacking operation.

A method of manufacturing a multilayer electronic component according to some embodiments of the present disclosure may include disposing first internal electrode patterns 221 including a first main portion 221a and a first convex portion 221b thicker than the first main portion 221a, at a first gap g1, on a first dielectric green sheet 211, and applying a first dielectric paste 211' on the first gap g1 and the first internal electrode pattern 221, to form a first sheet S1, disposing second internal electrode patterns 222 including a second main portion 222a and a second convex portion 222b thicker than the second main portion 222a, at a second gap g2, on a second dielectric green sheet 212, and applying a second dielectric paste 212' on the second gap g2 and the second internal electrode pattern 222, to form a second sheet S2, forming a laminated bar 10 by alternately disposing first sheets S1 and second sheets S2, forming a laminate 11 by cutting the laminated bar 10, and forming external electrodes 130 and 140 on the laminate 11. The forming the laminated bar may be performed by disposing the first sheet S1 so that the first dielectric paste 211' faces downwardly in the stacking direction and disposing the second sheet S2 so that the second dielectric paste 212' faces upwardly in the stacking direction.

### Forming First Sheet S1

The first sheet S1 may be formed by disposing first internal electrode patterns 221 including a first main portion 221a and a first convex portion 221b thicker than the first main portion 221a at a first gap g1, on the first dielectric green sheet 211, and by applying the first dielectric paste 211' on the first gap g1 and the first internal electrode pattern 221.

The first dielectric green sheet 211 may be formed of a ceramic paste containing ceramic powder, an organic solvent, a dispersant, and a binder.

The ceramic powder is a raw material for forming the dielectric layer 111 of the multilayer electronic component 100, and barium titanate-based materials, lead composite perovskite-based materials, or strontium titanate-based materials may be used. The barium titanate-based material may include BaTiO₃-based ceramic powder. Examples of the ceramic powder may include BaTiO₃, and (Ba₁₋ₓCaₓ) TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1), Ba(Ti_{1-y}Zr_{y})O₃ (0<y<1), or the like, in which calcium (Ca), Zr (zirconium) or the like is partially dissolved in BaTiO₃.

Organic components such as organic solvents, dispersants, and binders included in the first dielectric green sheet 211 are not particularly limited, but may include organic components based on toluene ethanol.

When the first dielectric green sheet 211 is fired, the dielectric layer 111 may be formed.

As an example of a method of disposing the first internal electrode pattern 221 on the first dielectric green sheet 211, a method in which a conductive paste containing a conductive metal, glass, and organic material is disposed on the first dielectric green sheet 211 by screen printing or gravure printing, may be used, but is not limited thereto. For example, thin film deposition methods such as sputtering or vacuum deposition may be used to deposit conductive metal on the first dielectric green sheet 211.

The first internal electrode pattern 221 may include a conductive metal. The conductive metal is not particularly limited, and any material with excellent electrical conductivity may be used. For example, the conductive metal may include at least one selected from the group consisting of nickel (Ni), copper (Cu), palladium (Pd), silver (Ag), gold (Au), platinum (Pt), tin (Sn), tungsten (W), titanium (Ti), and alloys thereof.

The first internal electrode pattern 221 may be disposed on the first dielectric green sheet 211. The first internal electrode pattern 221 may be an area in which the first internal electrode 121 is formed after firing.

Referring to FIG. 4, the first internal electrode pattern 221 may be disposed on the dielectric green sheet 211, and may include the first main portion 221a and the first convex portion 221b thicker than the first main portion, and the first internal electrode patterns 221 may be disposed at a first gap g1.

The first main portion 221a may form an area of the first internal electrode 121 included in the capacitance forming portion Ac after firing, and the first convex portion 221b may form an area extending from the area of the first internal electrode 121 included in the capacitance forming portion Ac to the first external electrode 130 after firing.

On the other hand, according to some embodiments, the thickness of the first convex portion 221b, which is an area connected to the first external electrode 130, is formed to be thicker than the first main portion 221a, and thus, electrical connectivity between the first internal electrode 121 and the first external electrode 130 may be improved.

As an example of a method of forming the first internal electrode pattern 221 so that the first convex portion 221b has a thicker thickness than the first main portion 221a, a method of printing the conductive paste to the thickness of the first main portion 221a once, and then additionally printing the conductive paste onto the area in which the first convex portion 221b is to be formed may be used, but is not limited thereto. For example, when using a deposition method, a method of making the deposition time of the area in which the first convex portion 221b is formed longer than the deposition time of the area in which the first main portion 221a is formed may be used.

The first internal electrode patterns 221 may be disposed at a first gap g1. In detail, the first internal electrode patterns 221 may be disposed to be spaced apart by a first gap g1 in a direction perpendicular to the direction in which the first sheet S1 and the second sheet S2, which will be described later, are stacked. As the first internal electrode pattern 221 is provided as a plurality of first internal electrode patterns 221 on the first dielectric green sheet 211, the first gap g1 may be provided as a plurality of first gaps g1, which may be substantially the same interval.

### Forming Second Sheet S2

The second sheet S2 may be formed by disposing second internal electrode patterns 222 including a second main portion 222a and a second convex portion 222b thicker than the second main portion 222a, at a second gap g2, on the second dielectric green sheet 212, and by applying the second dielectric paste 212' on the second gap g2 and the second internal electrode pattern 222.

The second dielectric green sheet 212 may be formed of a ceramic paste containing ceramic powder, an organic solvent, a dispersant, and a binder.

The ceramic powder is a raw material for forming the dielectric layer 111 of the multilayer electronic component 100, and barium titanate-based materials, lead composite perovskite-based materials, or strontium titanate-based materials may be used. The barium titanate-based material may include BaTiO₃-based ceramic powder, and examples of the ceramic powder may include BaTiO₃, and ((Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1), Ba(Ti_{1-y}Zr_{y})O₃ (0<y<1), or the like, in which calcium (Ca), zirconium (Zr) or the like is partially dissolved in BaTiO₃.

Organic components such as organic solvents, dispersants, and binders included in the second dielectric green sheet 212 are not particularly limited, but organic components based on toluene ethanol may be used.

When the second dielectric green sheet 212 is fired, the dielectric layer 111 may be formed like the first dielectric green sheet 211.

As an example of a method of disposing the second internal electrode pattern 222 on the second dielectric green sheet 212, a method of screen printing or gravure printing a conductive paste containing conductive metal, glass, and organic material on the first dielectric green sheet 212 may be used, but is not limited thereto. The conductive metal may be deposited on the second dielectric green sheet 212 using a thin film deposition method such as sputtering or vacuum deposition.

The second internal electrode pattern 222 may include a conductive metal. The conductive metal is not particularly limited, and any material with excellent electrical conductivity may be used. For example, the conductive metal may include at least one selected from the group consisting of nickel (Ni), copper (Cu), palladium (Pd), silver (Ag), gold (Au), platinum (Pt), tin (Sn), tungsten (W), titanium (Ti), and alloys thereof.

The second internal electrode pattern 222 may be disposed on the second dielectric green sheet 212. The second internal electrode pattern 222 may be an area in which the second internal electrode 122 is formed after firing.

Referring to FIG. 4, the second internal electrode patterns 222 may be disposed on the dielectric green sheet 212, include a second main portion 222a and a second convex portion 222b thicker than the second main portion, and may be disposed at a second gap g2.

The second main portion 222a may form an area of the second internal electrode 122 included in the capacitance forming portion Ac after firing, and the second convex portion 222b may form an area extending from the area of the second internal electrode 122 included in the capacitance forming portion Ac to the second external electrode 140 after firing.

Meanwhile, according to some embodiments, since the thickness of the second convex portion 222b, which is an area connected to the second external electrode 140, is formed to be thicker than the second main portion 222a, electrical connectivity between the second internal electrode 121 and the second external electrode 140 may be improved.

As an example of a method of forming the second internal electrode pattern 222 so that the second convex portion 222b has a thicker thickness than the second main portion 222a, a method of printing the conductive paste to the thickness of the second main portion 222a once, and then additionally printing the conductive paste in the area in which the second convex portion 222b is to be formed may be used, but is not limited thereto. For example, when using a deposition method, a method of making the deposition time of the area in which the second convex portion 222b is formed longer than the deposition time of the area in which the second main portion 222a is formed may be used.

The second internal electrode patterns 222 may be disposed at a second gap g2. In detail, the second internal electrode patterns 222 may be disposed to be spaced apart by the second gap g2 in a direction perpendicular to the direction in which the first sheet S2 and the second sheet S2 are stacked. A plurality of second gaps g2 may be formed as a plurality of second internal electrode patterns 222 are disposed on the second dielectric green sheet 212, and the plurality of second gaps g2 may be substantially the same interval.

The positions of the first convex portion 221b and the second convex portion 222b may be determined relative to the first main portion 221a and the second main portion 222a, respectively. In detail, the first convex portion 221b may be disposed between 1/4 and 3/4 points of the points where the first internal electrode pattern 221 is divided into four parts in a direction perpendicular to the stacking direction, and the second convex portion 222b may be disposed between 1/4 and 3/4 points of the points where the second internal electrode pattern 222 is divided into four parts in a direction perpendicular to the stacking direction.

Although there is no need to specifically limit the relationship between a thickness d1' of the first and second dielectric green sheets 211 and 212 and a thickness d2' of the first and second dielectric paste portions 211' and 212', respectively, for example, when the thickness d1' of the first and second dielectric green sheets 211 and 212 and the thickness d2' of the first and second dielectric paste portions 211' and 212' are substantially the same, deformation of the first sheet S1 and the second sheet S2 may be further suppressed during the lamination and compression process.

On the other hand, when the forming the laminated bar is performed by further disposing a third dielectric green sheet 213 between the first sheet S1 and the second sheet S2, the thickness of the first and second dielectric paste portions 211' and 212' may be thinner than the first to third dielectric green sheets.

The thickness e2' of the first and second convex portions 221b and 222b may be adjusted to be 1.1 times or more the thickness e1' of the first and second main portions 221a and 222a to alleviate the step portion, and may be adjusted to be 2.0 times or less, to suppress deformation of the first and second dielectric green sheets 211 and 212.

### Forming Laminated Bar 10

In some embodiments, forming the laminated bar 10 by alternately disposing the first sheet S1 and the second sheet S2 may be included.

In some embodiments, referring to FIG. 5, the laminated bar 10 may be formed by alternately disposing the first sheet S1 and the second sheet S2 and then pressing the same.

The positions of the first convex portion 221b and the second convex portion 222b may also be determined relative to the second gap g2 and the first gap g1, respectively. In detail, the forming the laminated bar may be performed by disposing the first convex portion 221b to overlap the second gap g2 in the stacking direction, and disposing the second convex portion 222b to overlap the first gap g1. Accordingly, the thickness of each of the internal electrodes 121 and 122 is thinned in the area in which the first and second internal electrodes 121 and 122 overlap in the stacking direction, and the thickness of each of the internal electrodes 121 and 122 is thick in areas in which the first and second internal electrodes 121 and 122 do not overlap in the stacking direction. Therefore, electrical connectivity between the internal electrodes 121 and 122 and the external electrodes 130 and 140 may be improved without reducing the capacitance per unit volume of the multilayer electronic component.

The positions of the first convex portion 221b and the second convex portion 222b may also be determined relative to the relationship between the first internal electrode pattern 221 and the second internal electrode pattern 222. In detail, the forming the laminated bar may be formed so that the first convex portion 221b does not overlap the second internal electrode pattern 222 in the stacking direction and so that the second convex portion 222b does not overlap the first internal electrode pattern 221 in the stacking direction. Accordingly, the thickness of each of the internal electrodes 121 and 122 is thinned in the area in which the first and second internal electrodes 121 and 122 overlap in the stacking direction, and the thickness of each of the internal electrodes 121 and 122 is thick in areas in which the first and second internal electrodes 121 and 122 do not overlap in the stacking direction. Therefore, electrical connectivity between the internal electrodes 121 and 122 and the external electrodes 130 and 140 may be improved without reducing the capacitance per unit volume of the multilayer electronic component.

### Forming Laminate 11

In some embodiments, forming the laminate 11 by cutting the laminated bar 10 after forming the laminated bar 10 may be included.

In some embodiments, referring to FIG. 5, the forming the laminate 11 may be performed by cutting the laminated bar 10 along a virtual straight line C1-C1 passing through the first convex portion 221b and the second gap g2 and a virtual straight line C1'-C1' passing through the second convex portion 222b and the first gap g1. Accordingly, one surface of the laminate 11 may be in contact with the first convex portion 221b of the first internal electrode pattern 221, and the other surface of the laminate 11 may be in contact with the second convex portion 222b of the second internal electrode pattern 222.

### Forming External Electrode on Laminate 11

In some embodiments, forming external electrodes 130 and 140 on the laminate 11 after forming the laminate 11 may be included. As an example of a method of forming the external electrodes 130 and 140, a method of transferring a sheet containing a conductive metal onto the laminate 11, or a method of sequentially forming a fired electrode, a conductive metal and a conductive resin layer containing a resin on the laminate 11, may be used.

According to some embodiments, the forming the laminated bar 10 may be performed by disposing the first sheet S1 so that the first dielectric paste 211' faces downwards in the stacking direction, and disposing the second sheet S2 so that the second dielectric paste 212' faces upwards in the stacking direction. At this time, 'upwards' and 'downwards' in the stacking direction do not mean the top and bottom relative to the ground, but may refer to one direction and the other direction of the stacking direction of the first sheet S1 and the second sheet S2 according to FIGS. 4 and 5.

As in some embodiments of the present disclosure, when the first sheet S1 is disposed so that the first dielectric paste 211' faces downwards in the stacking direction, and the second sheet S2 is disposed so that the second dielectric paste 212' faces upwards in the stacking direction, to form the laminated bar 10, since the neighboring first convex portion 221b is disposed to overlap the second gap g2 and the second convex portion 222b is disposed to overlap the first gap g1 in the stacking direction, while being stacked on each other, the level differences in the stacking process may be alleviated.

However, the first convex portion 221b and the second convex portion 222b are thicker than the first main portion 221a and the second main portion 222b, and the first internal electrode pattern 221 is stacked to face the upper part of the stacking direction, and the second internal electrode pattern 222 is disposed to face the lower part of the stacking direction, while being stacked on each other. Thus, there is a risk of short circuiting as a sufficient gap cannot be secured between internal electrodes after firing.

Accordingly, in the case in which stacking is performed by additionally disposing separate ceramic sheets between the internal electrode patterns 221 and 222 as in the related art case, process steps may become complicated and costs may increase. In addition, if a separate ceramic sheet is added, since the organic components are the same as the first sheet S1 and the second sheet S2, deformation may be caused by melting the organic components of the first sheet S1 and the second sheet S2.

Therefore, in some embodiments of the present disclosure, the forming the first sheet S1 may further include applying a first dielectric paste 211' on the first gap g1 and the first internal electrode pattern 221, and the forming the second sheet S2 may further include applying the second dielectric paste 212' on the second gap g2 and the second internal electrode pattern 222.

For example, the method of manufacturing a multilayer electronic component according to some embodiments may include an disposing a first internal electrode pattern 221 including a first main portion 221a and a first convex portion 221b thicker than the first main portion 221a on the first dielectric green sheet 211 at a first gap g1, and forming a first sheet S1 by applying a first dielectric paste 211' on the first gap g1 and the first internal electrode pattern 221, and disposing a second internal electrode pattern 222 including a second main portion 222a and a second convex portion 222b thicker than the second main portion 222a on the second dielectric green sheet 212 at a second gap g2, and forming a second sheet S2 by applying a second dielectric paste 212' on the second gap g2 and the second internal electrode pattern 222.

Accordingly, even if the stacking operation is performed by disposing the first sheet S1 so that the first dielectric paste 211' faces downward in the stacking direction and disposing the second sheet S2 so that the second dielectric paste 212' faces upward in the stacking direction, the phenomenon of deformation of the first sheet S1 and the second sheet S2 may be prevented, and a short circuit may be prevented by securing a sufficient gap between the first internal electrode pattern 221 and the second internal electrode pattern 222.

In some embodiments, the first dielectric paste 211' and the second dielectric paste 212' may include the same material as the organic material included in the first internal electrode pattern 221 and the second internal electrode pattern 222. Accordingly, during the stacking process, the first dielectric paste 211' and the second dielectric paste 212' melt the organic components of the first dielectric green sheet 211 and the second dielectric green sheet 212, and thus, the effect of preventing a phenomenon that causes deformation of the first dielectric green sheet 211 and the second dielectric green sheet 212 may be further improved. To this end, preferably, the first dielectric paste 211' and the second dielectric paste 212' may not include an organic component based on toluene ethanol that may be included in the first dielectric green sheet 211 and the second dielectric green sheet 212.

An example of the same material as the organic material included in the first internal electrode pattern 221 and the second internal electrode pattern 222 included in the first dielectric paste 211' and the second dielectric paste 212' may include dihydroterpinyl acetate (DHTA).

Referring to FIG. 5, the forming the laminated bar 10 may be performed so that the first dielectric paste 211' and the second dielectric paste 212' are in contact, but the present disclosure is not limited thereto.

When the forming the laminated bar 10 is performed so that the first dielectric paste 211' and the second dielectric paste 212' are in contact with each other, interface resistance may deteriorate between the internal electrodes 121 and 122 and the dielectric layer 111 after firing, which may cause deterioration of insulation resistance characteristics, such as a decrease in the Break Down Voltage (BDV) value of multilayer electronic components.

Accordingly, in some embodiments, the forming the laminated bar 10' of FIG. 7 may be performed by further disposing a third dielectric green sheet 213 between the first sheet S1 and the second sheet S2 as illustrated in FIG. 6, thereby preventing deterioration of the insulation resistance of the multilayer electronic component 100. This effect may be further improved when the insulation resistance of the third dielectric green sheet 213 is greater than insulation resistance of the first and second dielectric paste portions 211' and 212'.

The reason why the insulation resistance of the third dielectric green sheet 213 is different from insulation resistance of the first and second dielectric paste portions 211' and 212' may be due to differences in composition, and insulation resistance may be adjusted depending on the amount of acceptor element.

After forming the laminated bar 10', the laminate 11' may be formed by cutting the laminated bar 10' along the C1-C1 virtual straight line and the C1'-C1' virtual straight line as illustrated in FIG. 7. The meaning of the C1-C1 virtual straight line and the C1'-C1' virtual straight line is the same as in the forming the laminate 11 described above.

In some embodiments, as a third dielectric green sheet 213 is further disposed between the first sheet S1 and the second sheet S2, as illustrated in FIG. 7, the first sheet S1 and the second sheet S2 may respectively contact the third dielectric green sheet 213, without direct contacting each other.

Meanwhile, a method of manufacturing a multilayer electronic component according to some embodiments may include a firing operation. The firing operation may be performed between the forming the laminate 11 and the forming the external electrodes 130 and 140, but is not limited thereto. For example, the firing operation may be an firing the laminate 11 and the external electrodes 130 and 140 after forming the external electrodes 130 and 140.

Referring to FIGS. 4 to 7, in the stacking the first sheet S1 and the second sheet S2, cover sheets 312 and 313 may be disposed on the first and second sheets S1 and S2 located on the outermost side, which may be an area that forms the cover portions 112 and 113 of the multilayer electronic component 100 after firing.

As set forth above, according to some embodiments, short circuits between internal electrodes and deformation of a dielectric green sheet may be prevented by applying dielectric paste on the internal electrode pattern and the dielectric green sheet on which the internal electrode pattern is not disposed.

Although the embodiments have been described in detail above, the present disclosure is not limited by the above-described embodiments and the attached drawings, but is intended to be limited by the appended claims. Accordingly, various forms of substitution, modification, and change may be made by those skilled in the art without departing from the technical spirit of the present disclosure as set forth in the claims, and this will also be said to fall within the scope of the present disclosure.

In addition, the expression "an embodiment" or "some embodiments" used in the present disclosure does not mean the same embodiment, but is provided to emphasize and explain different unique features. However, the above-presented embodiments do not exclude being implemented in combination with the features of other embodiments. For example, even if a matter described in one specific embodiment is not explained in another embodiment, it may be understood as a description related to another embodiment, unless there is a description that is contrary or contradictory to the matter in another embodiment.

The terms used in this disclosure are only used to describe an embodiment and are not intended to limit the present disclosure. At this time, singular expressions include plural expressions unless the context clearly indicates otherwise.

While example embodiments have been illustrated and described above, it will be apparent to those skilled in the art that modifications and variations could be made without departing from the scope of the present disclosure as defined by the appended claims.

## Claims

1. A method of manufacturing a multilayer electronic component, comprising:
disposing first internal electrode patterns on a first dielectric green sheet, including a first main portion and a first convex portion having a thickness thicker than a thickness of the first main portion, wherein a first gap is created on the first dielectric green sheet on which the first internal electrode patterns are not disposed,
applying a first dielectric paste to the first gap and the first internal electrode patterns;
disposing second internal electrode patterns on a second dielectric green sheet, including a second main portion and a second convex portion having a thickness thicker than a thickness of the second main portion, wherein a second gap is created on the second dielectric green sheet on which the second internal electrode patterns are not disposed,
forming a second sheet by applying a second dielectric paste to the second gap and the second internal electrode patterns;
forming a laminated bar by alternately disposing the first sheet and the second sheet;
forming a laminate by cutting the laminated bar; and
forming an external electrode on the laminate,
wherein the forming the laminated bar is performed by disposing the first sheet so that the first dielectric paste faces downward in a stacking direction, and disposing the second sheet so that the second dielectric paste faces upward in the stacking direction.

2. The method of claim 1, wherein the first convex portion and the second convex portion are disposed between a point of 1/4 and a point of 3/4 among points obtained by dividing the first internal electrode pattern and the second internal electrode pattern into four parts in a direction, perpendicular to the stacking direction, respectively.

3. The method of claim 1, wherein the forming the laminated bar is performed by disposing the first convex portion to overlap the second gap in the stacking direction, and disposing the second convex portion to overlap the first gap in the stacking direction.

4. The method of claim 1, wherein the forming the laminated bar is performed so that the first convex portion does not overlap the second internal electrode pattern in the stacking direction, and the second convex portion does not overlap the first internal electrode pattern in the stacking direction.

5. The method of claim 1, wherein in the forming the laminated bar, the first dielectric paste and the second dielectric paste come into contact with each other.

6. The method of claim 1, wherein the first and second dielectric paste portions include the same material as an organic material included in the first and second internal electrode patterns.

7. The method of claim 1, wherein the first dielectric paste, the second dielectric paste, the first internal electrode patterns, and the second internal electrode patterns include dihydroterpinyl acetate (DHTA).

8. The method of claim 1, wherein the forming the laminate is performed by cutting the laminated bar along a virtual straight line passing through the first convex portion and the second gap and a virtual straight line passing through the second convex portion and the first gap.

9. The method of claim 1, wherein the forming the laminated bar comprises disposing a third dielectric green sheet between the first sheet and the second sheet.

10. The method of claim 9, wherein insulation resistance of the third dielectric green sheet is greater than insulation resistance of the first and second dielectric paste portions.

11. The method of claim 1, further comprising firing the laminate between the forming the laminate and the forming the external electrode.

12. The method of claim 1, further comprising firing the laminate and the external electrode after the forming the external electrode.

13. The method of claim 6, wherein the organic material includes dihydroterpinyl acetate (DHTA).
